# EUROPEAN PATENT APPLICATION

(11) **EP 3 413 385 A1**
(43) Date of publication of application: **12.12.2018**
(21) Application number: 17747602.5
(22) Date of filing: 03.02.2017
(51) Int. Cl.: H01M 8/18, H01M 8/02, H01M 8/04, H01M 8/04701, H01M 8/06, H01M 8/12

(54) **FUEL CELL**

(30) Priority: 04.02.2016 JP 2016020186
(71) Applicant: Connexx Systems Corporation, Kyoto 619-0294 (JP)
(72) Inventor: TAMAKI Ryo, Kyoto 6190294 (JP); MATOBA Tomohiko, Kyoto 6190294 (JP)
(74) Representative: Qip Patentanwälte Dr. Kuehn & Partner mbB
(86) International application number: PCT/JP2017/004103
(87) International publication number: WO 2017/135451

(57) **Abstract**

The purpose of the present invention is to provide a simple, compact fuel cell configured so as to have sufficiently large cell capacity and energy density. This fuel cell 10 has a pipy-shaped electrode composite 12, an anode fuel material 14, a heater 16, and a sealed container 20. The electrode composite 12 comprises a pipy-shaped, airtight solid electrolyte 12a, a cathode 12b, and an anode 12c. The solid electrolyte 12a conducts oxygen ions. The cathode 12b is formed on the inside surface of the solid electrolyte 12a, and reduces oxygen in air to oxygen ions during discharge. The anode 12c is formed on the outside surface of the solid electrolyte 12a, and oxidizes hydrogen gas to water vapor during discharge. The anode fuel material 14 reacts with water vapor to generate hydrogen gas, and becomes an oxide. The heater 16 is arranged on the outside of the sealed container 20 and/or the inside of the electrode composite 12. The sealed container 20 is arranged on the outside of the electrode composite 12, cooperating with the electrode composite 12 to tightly seal the anode fuel material 14 therein.

## Description

### TECHNICAL FIELD

The present invention relates to a fuel cell which is useful as a stationary power source or a power source for moving objects such as cars, and as a portable power source, in particular, to a solid oxide fuel cell which uses iron powder and regenerates fuel gas in a system.

### BACKGROUND ART

A fuel cell is a means of causing a power generator to generate electric power by supplying fuel gas. The fuel cell is not only expected to be applied as a middle-sized stationary energy storage or a drive source for an electric car or a hybrid car but has been also subjected to research and development for miniaturization and size reduction to realize an application as a power source for a portable device such as a mobile phone and a notebook computer.

Of all others, a solid oxide fuel cell (SOFC) using an inorganic solid electrolyte having oxygen conductivity is known as an excellent power generating device that is clean and highly efficient.

Patent Literature 1 describes a gas supply-exhaust manifold that is provided with a pipy-shaped body penetrating an exhaust chamber, thereby enabling to simplify a gas supply-exhaust structure and to reduce a size of a battery, and a solid oxide fuel cell bundle having the gas supply-exhaust manifold. In addition, Patent Literature 2 describes a fuel cell power generation system that has a reserve tank disposed between a hydrogen generator and a fuel cell, thereby enabling to stably supply hydrogen even when the load of the fuel cell varies.

### CITATION LIST

### PATENT LITERATURES

Patent Literature 1: JP 5188236 B
Patent Literature 2: JP 2004-281393 A

### SUMMARY OF INVENTION

### TECHNICAL PROBLEMS

However, the fuel cell bundle of Patent Literature 1 has a problem that, unless being constantly supplied with, for example, hydrogen as a fuel gas, the fuel cell bundle cannot continuously supply electric power. Moreover, the fuel cell power generation system of Patent Literature 2 has a problem that, although the system is provided with the hydrogen generator and the reserve tank and thus can continuously supply electric power, three separate structural elements, i.e., the fuel cell, the hydrogen generator and the reserve tank disposed therebetween, have to be connected for use, resulting in a complicated and large-sized system in whole.

The present invention has been made in view of the conventional problems and has an object to provide a fuel cell that has a simple and small-sized structure by having a hydrogen generating portion contained therein and besides has a sufficiently large cell capacity and high energy density.

In addition to the foregoing object, the present invention has another object to provide a fuel cell that has the power supply stability equal to or higher than that of a conventional fuel cell and has excellent reliability, maintainability and energy efficiency.

### SOLUTION TO PROBLEMS

In order to achieve the foregoing objects, the inventors of the present invention have made intensive studies and discovered that, by first forming a pipy-shaped cathode on an inner surface of a solid electrolyte, forming a pipy-shaped anode on an outer surface of the solid electrolyte, having air naturally or forcibly convected inside the cathode, putting an anode fuel material and water in a sealed container that is disposed outside the anode, and heating the whole, a fuel cell having a hydrogen generating portion contained therein can have a simple and small-sized structure and besides have a sufficiently large cell capacity and high energy density.

The inventors of the present invention also discovered that the power supply stability can be improved by increasing an air flow in the cathode when the air temperature inside the cathode is high or decreasing the air flow when the air temperature is low, and by decreasing the air flow when an open voltage between the cathode and the anode is high or increasing the air flow when the open voltage is low, and by pouring a predetermined amount of water into the sealed container when the open voltage between the cathode and the anode does not rise even if the air flow in the cathode is increased. The inventors have thereby completed the present invention.

Namely, the present invention provides a fuel cell comprising: an electrode composite in a pipy shape, the electrode composite including a solid electrolyte that is in a pipy shape and airtight and conducts oxygen ions, a cathode that is formed on an inner surface of the solid electrolyte and reduces oxygen contained in air to oxygen ions during discharging, and an anode that is formed on an outer surface of the solid electrolyte and oxidizes hydrogen gas to water vapor during discharging; an anode fuel material that reacts with the water vapor to generate the hydrogen gas and becomes itself an oxide; a sealed container that is provided with an outer wall disposed on an outside of the electrode composite and surrounding the electrode composite, and cooperates with the electrode composite to tightly seal the anode fuel material therein; and a heater that is disposed on at least one of an outside of the sealed container and an inside of the electrode composite and heats and maintains the solid electrolyte and the anode fuel material at a temperature equal to or higher than a predetermined temperature.

Here in the above invention, preferably, the electrode composite comprises an inner flow passage for allowing air to continuously rise from a lower end opening to an upper end opening so that air supplied into the electrode composite and heated by the heater rises and is discharged from the upper end opening of the electrode composite, whereby air naturally enters from the lower end opening of the electrode composite.

Preferably, the fuel cell further comprises a pump that is connected to an upper end opening or a lower end opening of the electrode composite so as to forcibly supply air into the electrode composite.

Preferably, the fuel cell further comprises a temperature measuring means that measures an air temperature of an inside of the electrode composite, a voltage measuring means that measures an open voltage between the cathode and the anode, and a flow rate regulator that is connected to one of ends of the electrode composite and regulates a flow rate of air supplied into the electrode composite based on at least one of the air temperature measured by the temperature measuring means and the open voltage measured by the voltage measuring means.

Preferably, the fuel cell further comprises a water injection amount controller that controls an injection amount of water injected into the sealed container based on the open voltage measured by the voltage measuring means.

Preferably, the sealed container is further provided with an end wall disposed at at least one of ends in opening directions of the outer wall, and two electrode supports that are each in a pipy shape and are respectively joined to opposite ends of the electrode composite, wherein a material of the solid electrolyte is a ceramic material, and a material of the sealed container includes stainless steel, wherein an outer periphery of the end wall is joined to one of ends in the opening directions of the outer wall, and an inner periphery of the end wall is joined to one of the electrode supports, and wherein at least one of the end wall and the electrode supports comprises an elastic deformation portion for absorbing a difference in a thermal expansion coefficient between the solid electrolyte and the outer wall.

Preferably, the sealed container further comprises a connecting member for preventing a short circuit of a lead wire of the anode and maintaining airtightness of the sealed container.

Preferably, the sealed container is further provided with an end wall disposed at at least one of ends in opening directions of the outer wall, and two electrode supports that are each in a pipy shape and are respectively joined to opposite ends of the electrode composite, wherein a material of the solid electrolyte and the sealed container is a ceramic material, and wherein an outer periphery of the end wall is joined to one of ends in the opening directions of the outer wall, and an inner periphery of the end wall is joined to one of the electrode supports.

Preferably, the sealed container is further provided with an end wall disposed at at least one of ends in opening directions of the outer wall, wherein a material of the solid electrolyte and the sealed container is a ceramic material, and wherein an outer periphery of the end wall is joined to one of ends in the opening directions of the outer wall, and an inner periphery of the end wall is joined to the electrode composite.

Preferably, the sealed container is further provided with a cover plate for replacing the anode fuel material, and wherein the cover plate is detachably fixed to the outer wall or the end wall.

Preferably, the sealed container is further provided with an end wall disposed at at least one of ends in opening directions of the outer wall, two electrode supports that are each in a pipy shape and are respectively joined to opposite ends of the electrode composite, and a cap for replacing the anode fuel material, and wherein an outer periphery of the end wall abuts the cap, and is joined to the one of ends in the opening directions of the outer wall via the cap by detachably screwing the cap to one of ends in the opening directions of the outer wall, while an inner periphery of the end wall abuts one of end surfaces of the electrode supports.

Preferably, a material of the solid electrolyte is a ceramic material, and a material of the sealed container is stainless steel, and wherein at least one of the end wall and the electrode supports comprises an elastic deformation portion for absorbing a difference in a thermal expansion coefficient between the solid electrolyte and the outer wall.

Preferably, a material of the solid electrolyte and the sealed container is a ceramic material.

Preferably, the heater is configured to be integrated with the outer wall.

Preferably, the fuel cell further comprises a heater support for supporting the heater inside the electrode composite, wherein the heater support is provided with a hole for supplying air into the electrode composite.

Preferably, the anode fuel material is a pellet consisting of iron particles or iron powder and a shape-retaining material which comprises a sintering-resistant material or a mixture thereof, the sintering-resistant material including aluminum oxide, silicon dioxide, magnesium oxide, zirconium oxide, wherein at least part of a surface of the anode fuel material is covered with the shape-retaining material, and wherein a proportion of a mass of the shape-retaining material to the anode fuel material is from 0.1% to 5%.

Preferably, the cathode oxidizes oxygen ions to oxygen during charging, wherein the anode reduces the water vapor to the hydrogen gas during charging, and wherein the oxide of the anode fuel material reversibly reacts with the hydrogen gas to generate the water vapor and becomes itself the anode fuel material.

### ADVANTAGEOUS EFFECTS OF INVENTION

According to the present invention, a simple and small-sized structure with a sufficiently large cell capacity and high energy density can be achieved.

According to the present invention, in addition to the above-described effect, the power supply stability can be equal to or higher than that of a conventional fuel cell, and reliability, maintainability and energy efficiency can be excellent.

### BRIEF DESCRIPTION OF DRAWINGS

[FIGS. 1] FIG. 1A is a front view schematically illustrating a fuel cell according to a first embodiment of the present invention, and FIG. 1B is a variation of a part thereof.
[FIG. 2] FIG. 2 is a front view schematically illustrating Variation 1 of the fuel cell according to the first embodiment of present invention.
[FIG. 3] FIG. 3 is a front view schematically illustrating Variation 2 of the fuel cell according to the first embodiment of the present invention.
[FIGS. 4] FIG. 4A is a front view schematically illustrating a fuel cell according to a second embodiment of the present invention, and FIG. 4B is a variation of a part thereof.
[FIG. 5] FIG. 5 is a front view schematically illustrating a fuel cell according to a third embodiment of the present invention.
[FIG. 6] FIG. 6 is a front view schematically illustrating a fuel cell according to a fourth embodiment of the present invention.
[FIG. 7] FIG. 7 is a plan view of the fuel cell illustrated in FIG. 6.
[FIG. 8] FIG. 8 is a side view of the fuel cell illustrated in FIG. 6.

### DESCRIPTION OF EMBODIMENTS

The fuel cell of the present invention is described below in detail based on preferred embodiments illustrated in the attached drawings.

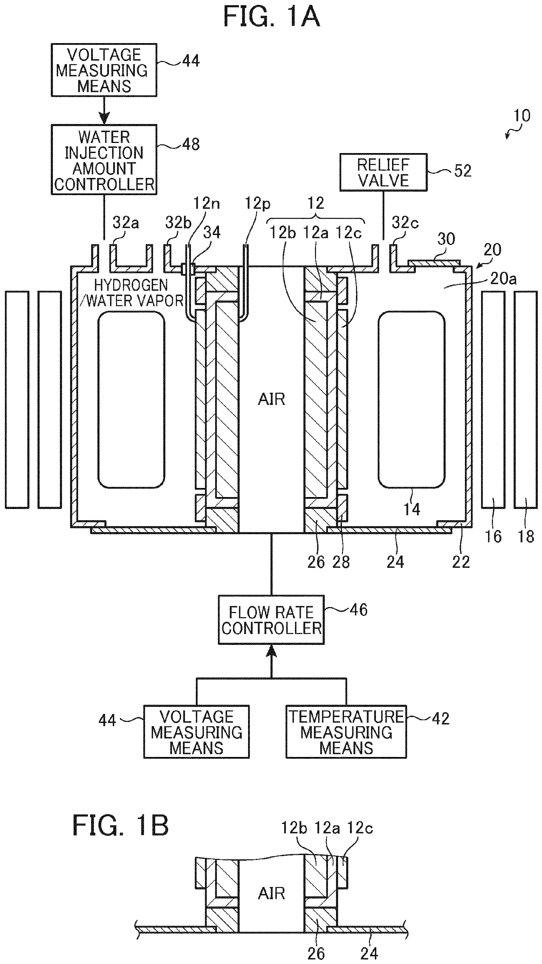

First, a fuel cell according to a first embodiment of the present invention is described. FIG. 1A is a front view illustrating the fuel cell according to the first embodiment of the present invention, and FIG. 1B is a variation of a part thereof.

A fuel cell 10 of the present invention includes a pipy-shaped electrode composite 12, an anode fuel material 14, a heater 16 and a sealed container 20. The electrode composite 12 is composed of a pipy-shaped, airtight solid electrolyte 12a, a cathode 12b (also referred to as air electrode) and an anode 12c (also referred to as fuel electrode), and is provided with a cathode lead wire 12p and an anode lead wire 12n. The solid electrolyte 12a conducts oxygen ions, the cathode 12b is formed on an inner surface of the solid electrolyte 12a and reduces oxygen contained in air to oxygen ions during discharging, and the anode 12c is formed on an outer surface of the solid electrolyte 12a and oxidizes hydrogen gas to water vapor during discharging.

While FIGS. 1 illustrate only a single electrode composite 12, a plurality of electrode composites may be provided in a single sealed container. In this case, the plurality of electrode composites are connected to one another in parallel or in series, using the cathode lead wire 12p and the anode lead wire 12n.

The anode fuel material 14 reacts with water vapor to generate hydrogen gas and becomes itself an oxide. The heater 16 is disposed on at least one of an outside of the sealed container 20 and an inside of the electrode composite 12 and heats and maintains the solid electrolyte 12a and the anode fuel material 14 at a temperature equal to or higher than a predetermined temperature. The sealed container 20 includes an outer wall 22 disposed on an outside of the electrode composite 12 and surrounding the electrode composite 12, and cooperates with the electrode composite 12 to tightly seal the anode fuel material 14 therein. As necessary, a heat insulator 18 may be disposed on an outside of the heater 16. A preferable material of the heat insulator 18 is one having a low thermal conductivity such as a foamed material or a vacuum vessel.

The electrode composite has different types, i.e., a type having the anode formed on an inside of the solid electrolyte and the cathode formed on an outside of the solid electrolyte (hereinafter, referred to as "inner anode type") and a type having the cathode formed on the inside of the solid electrolyte and the anode formed on the outside of the solid electrolyte (referred to as "inner cathode type"). In the fuel cell using the electrode composite of the inner anode type, from the inside toward the outside, the anode fuel material, the anode, the solid electrolyte, the cathode, an air area and the heater are arranged in this order, or, alternatively, the heater, the anode fuel material, the anode, the solid electrolyte, the cathode and the air area are arranged in this order; the anode fuel material comes to the first or second position from the inside in a multiple pipy-shaped structure.

On the other hand, since the fuel cell 10 of the present invention makes use of the electrode composite of the inner cathode type, the air area, the cathode 12b, the solid electrolyte 12a, the anode 12c, the anode fuel material 14 and the heater 16 are arranged in this order from the inside toward the outside; the anode fuel material 14 thus comes to the fifth position from the inside in the multiple pipy-shaped structure.

In the multiple pipy-shaped structure where pipes are arranged from the inside toward the outside, it is more difficult to increase a volume of an annular space formed between one pipe and another pipe disposed immediately outside thereof as the position is closer to the center, whereas it is easier as the position is farther from the center; therefore, the anode fuel material 14 of the fuel cell 10 according to the present invention can have a larger volume than a volume of an anode fuel material of a fuel cell using the electrode composite of the inner anode type. Accordingly, when being structured as above, the fuel cell 10 according to the present invention can have a simple and small-sized structure with a sufficiently large cell capacity and high energy density.

In the fuel cell 10 according to the present invention, the electrode composite 12 may have an inner flow passage allowing air to continuously rise from a lower end opening to an upper end opening so that air naturally convects inside the electrode composite 12. In this case, air supplied into the electrode composite 12 is heated by the heater 16 to rise and is discharged from the upper end opening of the electrode composite 12, whereby air naturally enters from the lower end opening of the electrode composite 12.

The fuel cell 10 according to the present invention may further include a pump (not shown) connected to the upper end opening or the lower end opening of the electrode composite 12 for forcibly convecting air inside the electrode composite 12. In this case, air is forcibly supplied into the electrode composite 12.

The fuel cell 10 according to the present invention may further include a temperature measuring means 42, a voltage measuring means 44 and a flow rate regulator 46. The temperature measuring means 42 measures an air temperature of an inside of the electrode composite 12. The voltage measuring means 44 measures an open voltage between the cathode 12b and the anode 12c. The flow rate regulator 46 is, for example, a flow rate regulating valve, is connected to one of ends of the electrode composite 12 and regulates a flow rate of air that is supplied into the electrode composite 12 based on at least one of the air temperature measured by the temperature measuring means 42 and the open voltage measured by the voltage measuring means 44.

That is, the flow rate regulator 46 increases an air flow inside the electrode composite 12 when the open voltage between the cathode 12b and the anode 12c decreases. In this case, with consideration not to excessively lower the air temperature of the inside of the electrode composite 12, the flow rate regulating valve is opened such that as the air temperature is higher, the increase in the air flow becomes larger, while as the air temperature is lower, the increase in the air flow becomes smaller. Accordingly, when being structured as above, the fuel cell 10 according to the present invention can have the power supply stability that is equal to or higher than that of a conventional fuel cell.

The fuel cell 10 according to the present invention may further include a water injection amount controller 48 that is connected to a water supply portion 32a of the sealed container 20. The water injection amount controller 48 controls an amount of water injected into the sealed container 20 based on the open voltage measured by the voltage measuring means 44. That is, when the open voltage between the cathode 12b and the anode 12c continues to decrease even after the air flow is regulated by the flow rate regulator 46, the water injection amount controller 48 intermittently injects a predetermined amount of water into the sealed container 20 while checking the open voltage. A water injection amount for each injection is determined based on the size and the pressure resistance of the sealed container. As needed, the injected water is discharged from a drainage portion 32b of the sealed container 20.

In this case, it is difficult to provide, in place of the voltage measuring means 44, a pressure measuring means for measuring an inner pressure of the sealed container 20 and to control the amount of water injected into the sealed container 20 based on the inner pressure measured by the pressure measuring means. That is, since hydrogen and water vapor are both present in the sealed container, even if the pressure measuring means is provided, the pressure of only hydrogen cannot be independently measured, and the hydrogen pressure in the sealed container cannot be maintained at a predetermined value when the load of the fuel cell varies.

In addition, if hydrogen is injected in place of water, the similar effect to that of water would be obtained. For injection of hydrogen, however, the fuel cell needs to have a hydrogen generator installed therein and would thus become complicated and large-sized. On the other hand, the fuel cell 10 according to the present invention can be prevented from becoming complicated and large-sized since water is injected. Accordingly, when being structured as above, the fuel cell 10 according to the present invention can be simple and small-sized and besides can have the power supply stability that is equal to or higher than that of a conventional fuel cell.

The fuel cell 10 may further include a relief valve 52 connected to a relief valve connector 32c of the sealed container 20. The relief valve 52 is to maintain the inner pressure of the sealed container 20 at or lower than a predetermined value for safety. The relief valve 52 may be an ordinary relief valve and is preferably one like a rupture disc, which has an airtight structure and ruptures and releases the pressure at a time of pressure rise.

In the fuel cell 10 according to the present invention, the sealed container 20 may further include an end wall 24 and two pipy-shaped electrode supports 26. The end wall 24 is disposed at at least one of ends in opening directions of the outer wall 22. The two pipy-shaped electrode supports 26 are independently joined to opposite ends of the electrode composite 12. A material of the solid electrolyte 12a is a ceramic material, and a material of the sealed container 20 including the electrode supports 26 includes stainless steel. An outer periphery of the end wall 24 is joined to one of ends in opening directions of the outer wall 22, and an inner periphery of the end wall 24 is joined to one of the electrode supports 26. At least one of the end wall 24 and the electrode supports 26 has an elastic deformation portion (not shown) for absorbing a difference in a thermal expansion coefficient between the solid electrolyte 12a and the outer wall 22.

That is, the end wall 24 is a member made of stainless steel in a diaphragm-like shape, and the elastic deformation portion may be provided between the outer periphery and the inner periphery of the end wall 24. An electrode support 26 may be integrated with the elastic deformation portion made of rubber or the like through bonding or the like, which elastic deformation portion is held between a stainless steel portion joined to the electrode composite 12 and a stainless steel portion joined to the inner periphery of the end wall 24.

When the material of the solid electrolyte 12a is a ceramic material and the material of the sealed container 20 is stainless steel, by being heated with the heater 16, they may have a length difference due to a difference in the thermal expansion coefficient between the solid electrolyte 12a and the outer wall 22, whereby a crack may be generated and airtightness may decrease. On the contrary, in the fuel cell 10 according to the present invention, the elastic deformation portion absorbs the length difference and can thus remove the possibility of a decrease in airtightness. Accordingly, when being structured as above, the fuel cell 10 according to the present invention can have the reliability that is equal to or higher than that of a conventional fuel cell.

In the fuel cell 10 according to the present invention, the sealed container 20 may further include a connecting member 34 for preventing a short circuit of the anode lead wire 12n and for maintaining the airtightness of the sealed container 20. That is, when the material of the sealed container 20 is stainless steel, the anode lead wire 12n may be short-circuited with the sealed container 20. On the contrary, the fuel cell 10 according to the present invention has the connecting member 34, which can remove the possibility of a short circuit. Accordingly, when being structured as above, the fuel cell 10 according to the present invention can have the reliability that is equal to or higher than that of a conventional fuel cell. An example of the connecting member 34 is a Conax sealing gland available from IBP Technologies Co., Ltd.

In the fuel cell 10 according to the present invention, the sealed container 20 may further include a cover plate 30 for replacement of the anode fuel material 14. The cover plate 30 is fixed to the outer wall 22 or the end wall 24 in a detachable manner. That is, when the fuel cell 10 is used as a primary cell that only discharges, the anode fuel material 14 that has become itself an oxide needs to be replaced by a fresh anode fuel material 14. Accordingly, when being structured as above, the fuel cell 10 according to the present invention can have the maintainability that is equal to or higher than that of a conventional fuel cell.

Next, the relationship between the material of the anode fuel material 14 and the fuel cell 10 is described.

In the fuel cell 10 according to the present invention, the anode fuel material 14 may be a pellet comprising iron particles or iron powder and a shape-retaining material. The shape-retaining material is a sintering-resistant material or a mixture thereof. Examples of the sintering-resistant material include aluminum oxide, silicon dioxide, magnesium oxide and zirconium oxide. The anode fuel material 14 has at least part of its surface covered by the shape-retaining material, and a proportion of a mass of the shape-retaining material based on the anode fuel material 14 is from 0.1% to 5%. The pellet has a diameter of 2 to 10 mm, for example.

Preferably, the anode fuel material 14 is always oxidized under the condition that a partial pressure of an oxidation gas is at least 1/1000 of a partial pressure of a reductive gas and is covered by the shape-retaining material that is a metal oxide with a melting point of 1000°C or higher. Since the anode fuel material 14 is covered by the shape-retaining material, sintering of the anode fuel material 14 is suppressed and the oxidation-reduction reaction is repeated. In other words, the fuel cell can repeatedly discharge and charge to work as a secondary cell. The foregoing shape-retaining material particularly has a high melting point, exhibiting high sintering suppression effect. The mass proportion of the shape-retaining material contained by the anode fuel material 14 is not particularly limited and is preferably from 0.1% to 5% such that the oxidation-reduction rate is not excessively suppressed.

That is, when the fuel cell 10 is used as a secondary cell, it is required that the cathode 12b and the anode 12c separately repeat the reactions of discharging and charging, and that the anode fuel material 14 repeats the oxidation reaction and the reduction reaction. Accordingly, when being structured as above, the necessity of replacement of the anode fuel material 14 can be eliminated so that the fuel cell 10 according to the present invention can have the maintainability that is equal to or higher than that of a conventional fuel cell.

In the fuel cell 10 according to the present invention, the cathode 12b oxides oxygen ions to oxygen during charging, and the anode 12c reduces water vapor to hydrogen gas during charging, while the oxide of the anode fuel material 14 may reversibly react with hydrogen gas to generate water vapor and may become itself the anode fuel material 14. In other words, when the fuel cell 10 is used as a secondary cell, similarly, it is required that the cathode 12b and the anode 12c separately undergo the reactions of discharging and charging, and that the anode fuel material 14 repeatedly undergoes the oxidation reaction and the reduction reaction. Accordingly, when being structured as above, the necessity of replacement of the anode fuel material 14 can be eliminated so that the fuel cell 10 according to the present invention can have the maintainability that is equal to or higher than that of a conventional fuel cell.

Next, the state of the opposite ends of the electrode composite 12 is described.

When the electrode composite 12 in which the solid electrolyte 12a, the cathode 12b and the anode 12c are stacked into three layers is joined to the electrode supports 26 whose material is stainless steel, the cathode 12b short-circuits with the anode 12c via the electrode supports 26 if the electrode composite 12 is merely cut orthogonally to the opening directions with the cathode 12b and the anode 12c being exposed at the opposite ends of the electrode composite 12.

In order to prevent such short circuit, predetermined amounts of the opposite ends of the cathode 12b and the anode 12c are peeled, and the solid electrolyte 12a covers opposite end surfaces of the cathode 12b. Alternatively, predetermined amounts of the opposite ends of the anode 12c are peeled. In this case, since the cathode 12b is exposed at the opposite ends of the electrode composite 12, the electrode supports 26 and the cathode 12b are electrically conducted with each other. Accordingly, when a plurality of electrode composites are provided in a single sealed container, the plurality of electrode composites are connected to one another in parallel.

Next, methods for joining ceramics are described.

There are mainly three different methods for joining ceramics including an intermediate material method, a direct joining method and a mechanical joining method. The intermediate material method involves bonding with an organic adhesive or an inorganic adhesive, brazing with an inorganic material or a metal material, or pressure-bonding. The direct joining method involves solid-phase bonding through diffusion or sintering, or welding with an electron beam or a laser beam. The mechanical joining method involves shrinkage fitting, tightening with a bolt, or tightening with a clamp.

FIG. 1A illustrates an example where a tube connector 28 is used to join the solid electrolyte 12a whose material is a ceramic material to the electrode supports 26 whose material is stainless steel. In addition, FIG. 1B illustrates an example where these components are joined by the intermediate material method and the direct joining method; the joining method is not particularly limited as long as it can assuredly join the components, and any of the foregoing methods can be adopted.

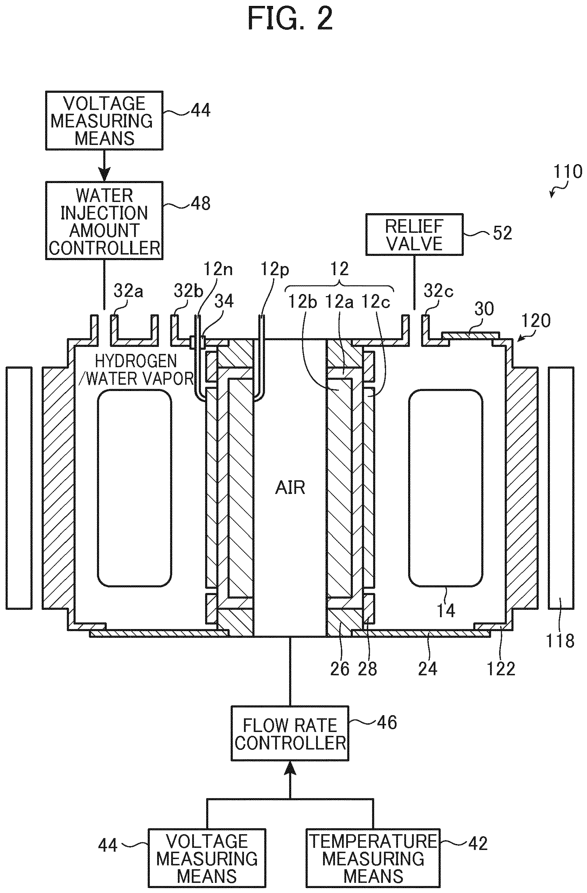

Next, Variation 1 of the fuel cell according to the first embodiment of the present invention is described. FIG. 2 is a front view schematically illustrating Variation 1 of the fuel cell according to the first embodiment of the present invention.

A fuel cell 110 according to the present invention, as compared with the fuel cell 10, has the same configuration except including a heat insulator 118 in place of the heat insulator 18, including a sealed container 120 in place of the sealed container 20, and including an outer wall 122 in place of the heater 16 and the outer wall 22; the same constitutional elements are assigned with the same references, and the descriptions thereof are omitted. The heat insulator 118 corresponds to the heat insulator 18 and has a shape with a smaller diameter but has otherwise the same basic function as that of the heat insulator 18. Therefore, the description of the heat insulator 118 is omitted.

In the fuel cell 110 according to the present invention, a heater may be structured to be integrated with the outer wall 122. That is, by having the heater built in the outer wall 122 of the sealed container 120, the fuel cell 110 decreases the number of components and is provided with the heat insulator 118 having the smaller outer diameter and inner diameter. Accordingly, when being structured as above, the fuel cell 110 according to the present invention can have a simple and small-sized structure with a sufficiently large cell capacity and high energy density.

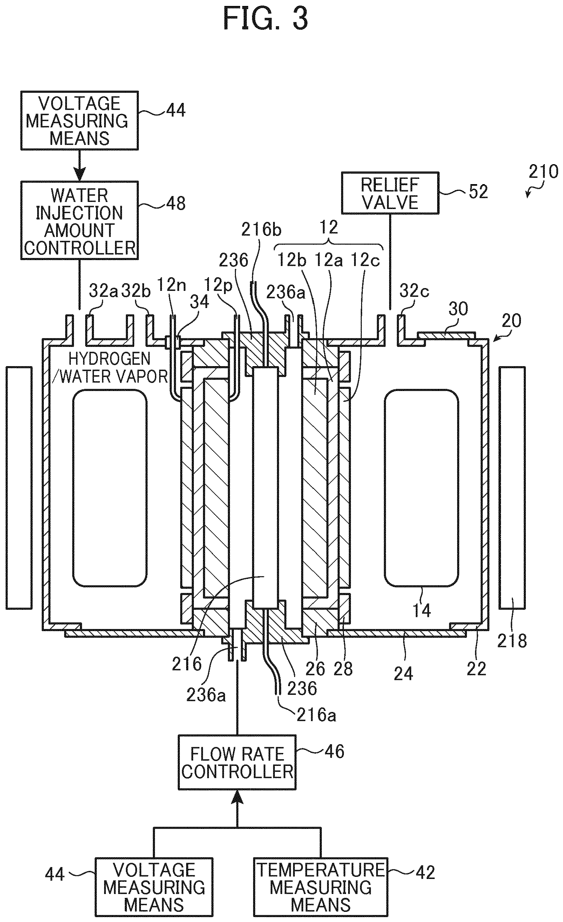

Next, Variation 2 of the fuel cell according to the first embodiment of the present invention is described. FIG. 3 is a front view schematically illustrating Variation 2 of the fuel cell according to the first embodiment of the present invention.

A fuel cell 210 according to the present invention, as compared with the fuel cell 10, has the same configuration except including, in place of the heater 16, a heater 216 with a lead wire 216a and a lead wire 216b and heater supports 236 each having a hole 236a and including a heat insulator 218 in place of the heat insulator 18; the same constitutional elements are assigned with the same references, and the descriptions thereof are omitted. The heat insulator 218 corresponds to the heat insulator 18 and has a shape with a smaller diameter but has otherwise the same basic function as that of the heat insulator 18. Therefore, the description of the heat insulator 218 is omitted.

Since the fuel cell 210 according to the present invention uses the electrode composite of the inner cathode type, the heater 216, an air area, the cathode 12b, the solid electrolyte 12a, the anode 12c, and the anode fuel material 14 are arranged in this order from the inside toward the outside; the anode fuel material 14 is disposed at the sixth position from the inside in the multiple pipy-shaped structure.

The fuel cell 210 according to the present invention may further include the heater supports 236. The heater supports 236 support the heater 216 inside the electrode composite 12 and are each provided with the hole 236a for supplying air into the electrode composite 12. That is, the fuel cell 210 is provided with the heat insulator 218 having the smaller outer diameter and inner diameter since the heater 216 is held inside the electrode composite 12.

The desirable temperature at which the solid electrolyte 12a is heated and maintained is 800°C or higher, while the desirable temperature at which the anode fuel material 14 is heated and maintained is 550°C or higher; since the temperature for the solid electrolyte 12a is much higher than the temperature for the anode fuel material 14, if the heater is disposed on an outside of the anode fuel material 14 as in the fuel cell 10 illustrated in FIG. 1A and the fuel cell 110 illustrated in FIG. 2, the solid electrolyte 12a located far from the heater would need to be heated to and maintained at 800°C or higher while the anode fuel material 14 located near the heater would need to be heated and maintained at 550°C or higher, and accordingly, the energy efficiency would become inferior. In addition, since the anode fuel material 14 would be excessively heated, the power output might decrease due to agglomeration of the material.

On the contrary, when the heater is disposed inside the electrode composite 12 as in the fuel cell 210 illustrated in FIG. 3, it is only necessary to heat and maintain the anode fuel material 14 located far from the heater at 550°C or higher and the solid electrolyte 12a located near the heater at 800°C or higher. Accordingly, when being structured as above, the fuel cell 210 according to the present invention can have the energy efficiency that is equal to or higher than that of a conventional fuel cell. In addition, since the anode fuel material 14 is not excessively heated, a decrease in the power output due to agglomeration can be prevented.

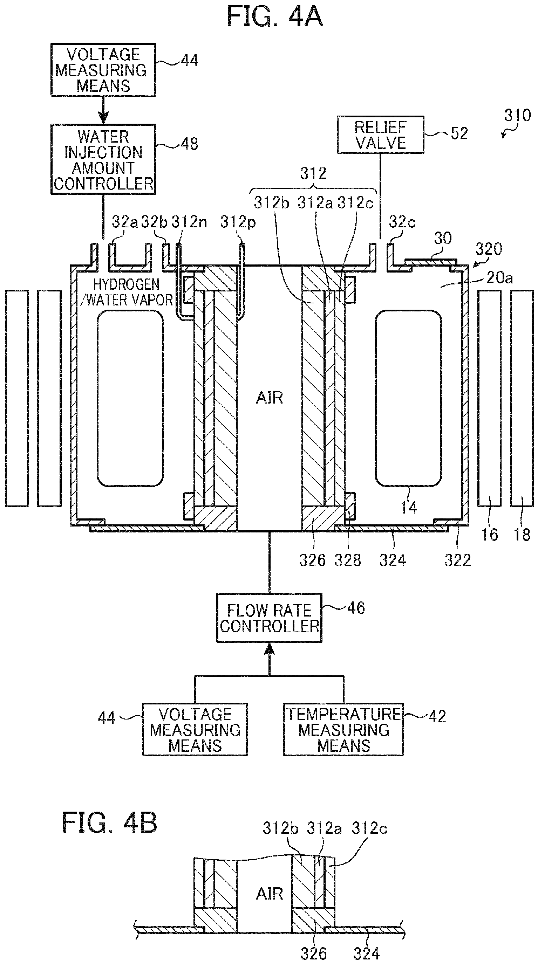

Next, a fuel cell according to a second embodiment of the present invention is described. FIG. 4A is a front view schematically illustrating the fuel cell according to the second embodiment of the present invention, and FIG. 4B is a variation of a part thereof.

A fuel cell 310 according to the present invention, as compared with the fuel cell 10, has the same configuration except including, in place of the electrode composite 12, an electrode composite 312 composed of a solid electrolyte 312a, a cathode 312b and an anode 312c and provided with a cathode lead wire 312p and an anode lead wire 312n, and including a sealed container 320, an outer wall 322, an end wall 324, electrode supports 326 and a tube connector 328 in place of the sealed container 20, the outer wall 22, the end wall 24, the electrode supports 26 and the tube connector 28, respectively; the same constitutional elements are assigned with the same references, and the descriptions thereof are omitted.

The electrode composite 312 has the solid electrolyte 312a, the cathode 312b and the anode 312c that are stacked into three layers and are merely cut orthogonally to opening directions and has opposite ends at each of which the cathode 312b and the anode 312c are exposed. FIG. 4A illustrates an example where the tube connector 328 is used to join the electrode composite 312 to the electrode supports 326. In addition, FIG. 4B illustrates an example where these components are joined by the intermediate material method and the direct joining method; the joining method is not particularly limited as long as it can assuredly join the components, and any of the foregoing methods can be adopted.

In the fuel cell 310 according to the present invention, the sealed container 320 may further include the end wall 324 and two pipy-shaped electrode supports 326. The end wall 324 is disposed at at least one of ends in opening directions of the outer wall 322. The two pipy-shaped electrode supports 326 are independently joined to opposite ends of the electrode composite 312. A material of the sealed container 320 including the solid electrolyte 312a and the electrode supports 326 is a ceramic material. An outer periphery of the end wall 324 is joined to one of ends in opening directions of the outer wall 322, and an inner periphery of the end wall 324 is joined to one of the electrode supports 326.

That is, the anode fuel material 14 in the fuel cell 310 shown in FIG. 4A is located at the fifth position from the inside in the multiple pipy-shaped structure like in the fuel cell 10 shown in FIG. 1A described above or located at the sixth position like in the fuel cell 210 shown in FIG. 3 described above. Accordingly, the volume of the anode fuel material 14 can be larger than the volume of an anode fuel material of a fuel cell using an electrode composite of the inner anode type. Accordingly, when being structured as above, the fuel cell 310 according to the present invention can have a simple and small-sized structure with a sufficiently large cell capacity and high energy density.

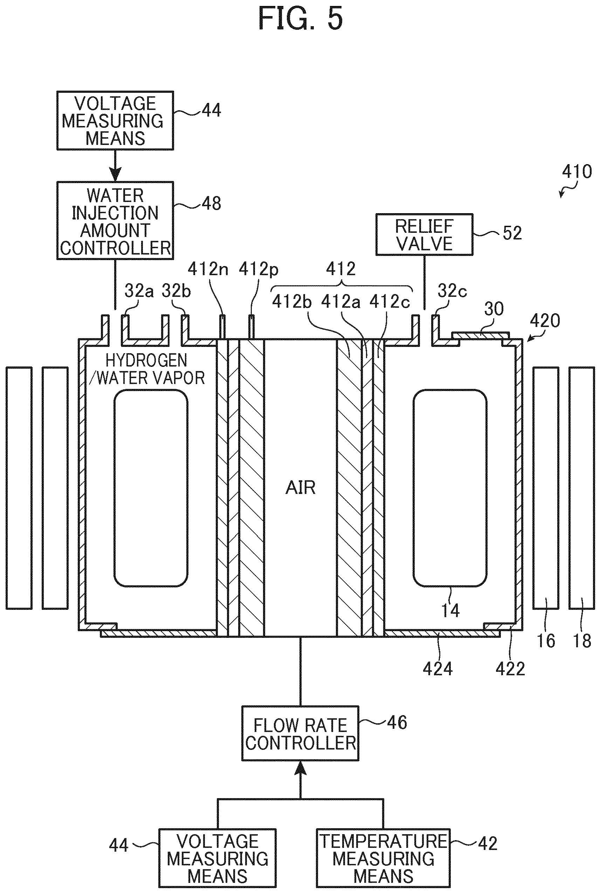

Next, a fuel cell according to a third embodiment of the present invention is described. FIG. 5 is a front view schematically illustrating the fuel cell according to the third embodiment of the present invention.

A fuel cell 410 according to the present invention, as compared with the fuel cell 10, has the same configuration except including, in place of the electrode composite 12, an electrode composite 412 composed of a solid electrolyte 412a, a cathode 412b and an anode 412c and provided with a cathode lead wire 412p and an anode lead wire 412n, and including a sealed container 420, an outer wall 422 and an end wall 424 in place of the sealed container 20, the outer wall 22 and the end wall 24, respectively; the same constitutional elements are assigned with the same references, and the descriptions thereof are omitted.

The electrode composite 412 has the solid electrolyte 412a, the cathode 412b and the anode 412c that are stacked into three layers and are merely cut orthogonally to opening directions and has opposite ends at each of which the cathode 412b and the anode 412c are exposed.

In the fuel cell 410 according to the present invention, the sealed container 420 may further include the end wall 424. The end wall 424 is disposed at at least one of ends in opening directions of the outer wall 422. A material of the solid electrolyte 412a and the sealed container 420 is a ceramic material. The outer periphery of the end wall 424 is joined to one of the ends in the opening directions of the outer wall 422, while an inner periphery of the end wall 424 is joined to the electrode composite 412.

That is, the anode fuel material 14 in the fuel cell 410 shown in FIG. 5 is located at the fifth position from the inside in the multiple pipy-shaped structure like in the fuel cell 10 shown in FIG. 1A described above or located at the sixth position like in the fuel cell 210 shown in FIG. 3 described above. Accordingly, the volume of the anode fuel material 14 can be larger than the volume of an anode fuel material of a fuel cell using an electrode composite of the inner anode type. Accordingly, when being structured as above, the fuel cell 410 according to the present invention can have a simple and small-sized structure with a sufficiently large cell capacity and high energy density.

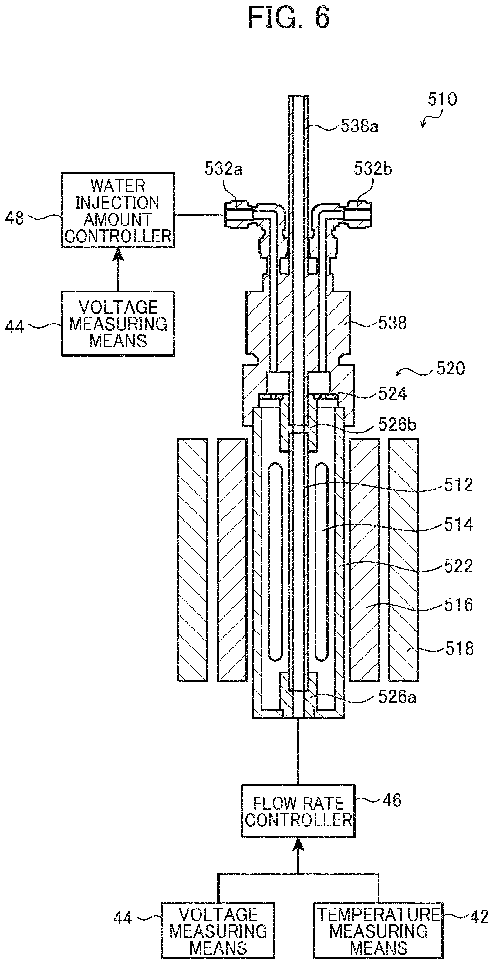

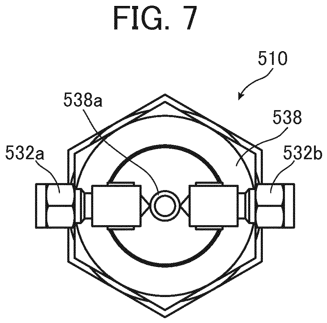

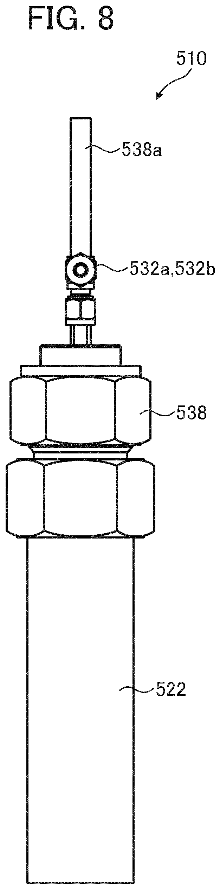

Next, a fuel cell according to a fourth embodiment of the present invention is described. FIG. 6 is a front view schematically illustrating the fuel cell according to the fourth embodiment of the present invention, FIG. 7 is a plan view of the fuel cell illustrated in FIG. 6, and FIG. 8 is a side view of the fuel cell illustrated in FIG. 6.

A fuel cell 510 according to the present invention, as compared with the fuel cell 10, has the same configuration except including, in place of the electrode composite 12, an electrode composite 512 composed of a solid electrolyte 512a, a cathode 512b and an anode 512c, and including a sealed container 520, an outer wall 522, an end wall 524, electrode supports 526a and 526b, a cap 538 and an exhaust tube 538a in place of the sealed container 20, the outer wall 22, the end wall 24 and the electrode supports 26; the same constitutional elements are assigned with the same references, and the descriptions thereof are omitted. In addition, an anode fuel material 514, a heater 516 and a heat insulator 518 correspond to the anode fuel material 14, the heater 16 and the heat insulator 18, respectively; while having different shapes, they have the same basic functions, and the descriptions thereof are omitted. FIGS. 7 and 8 illustrate the fuel cell 510 from which the heater 516 and the heat insulator 518 are removed.

The electrode composite 512, in place of the electrode composite 12, is composed of a solid electrolyte 512a (not shown), a cathode 512b (not shown) and an anode 512c (not shown), and opposite ends of the electrode composite 512 are in different states depending on a material of the electrode supports 526a and 526b to which the electrode composite 512 is joined.

In the fuel cell 510 according to the present invention, the sealed container 520 may further include the end wall 524, the two pipy-shaped electrode supports 526a and 526b and the cap 538 for replacement of the anode fuel material 514. The end wall 524 is disposed at at least one of ends in opening directions of the outer wall 522. The two pipy-shaped electrode supports 526a and 526b are independently joined to the opposite ends of the electrode composite 512. An outer periphery of the end wall 524 abuts the cap 538, and the cap 538 is detachably screwed to one of the ends in the opening directions of the outer wall 522 so that the outer periphery of the end wall 524 is joined to the one of the ends in the opening directions of the outer wall 522 via the cap 538, and an inner periphery of the end wall 524 abuts an end surface of the electrode support 526b. The cap 538 is provided with a water supply portion 532a connected to the water injection amount controller 48, a drainage portion 532b for discharging the injected water as necessary, and an exhaust tube 538a for exhausting air from the inside of the electrode composite 512.

That is, the anode fuel material 514 in the fuel cell 510 shown in FIG. 6 is located at the fifth position from the inside in the multiple pipy-shaped structure like in the fuel cell 10 shown in FIG. 1A described above or located at the sixth position like in the fuel cell 210 shown in FIG. 3 described above. Accordingly, the volume of the anode fuel material 514 can be larger than the volume of an anode fuel material of a fuel cell using an electrode composite of the inner anode type. When the fuel cell 510 is used as a primary cell that only discharges, the anode fuel material 514 that has become itself an oxide needs to be replaced by a fresh anode fuel material 514. Accordingly, when being structured as above, the fuel cell 510 according to the present invention can have a simple and small-sized structure with a sufficiently large cell capacity and high energy density and can also have maintainability that is equal to or higher than that of a conventional fuel cell.

In the fuel cell 510 according to the present invention, a material of the solid electrolyte 512a may be a ceramic material, and a material of the sealed container 520 may be stainless steel. In this case, at least one of the end wall 524 and the electrode supports 526a and 526b has an elastic deformation portion (not shown) for absorbing a difference in the thermal expansion coefficient between the solid electrolyte 512a and the outer wall 522.

That is, the end wall 524 is a member made of stainless steel in a diaphragm-like shape, and the elastic deformation portion may be provided between the outer periphery and the inner periphery of the end wall 524. The electrode support 526b may be integrated with the elastic deformation portion made of rubber or the like through bonding or the like, which elastic deformation portion is held between a stainless steel portion joined to the electrode composite 512 and a stainless steel portion joined to the inner periphery of the end wall 524.

When the material of the solid electrolyte 512a is a ceramic material and the material of the sealed container 520 is stainless steel, by being heated with the heater 516, they may have a length difference due to the difference in the thermal expansion coefficient between the solid electrolyte 512a and the outer wall 522, whereby a crack may be generated and airtightness may decrease. On the contrary, in the fuel cell 510 according to the present invention, the elastic deformation portion absorbs the length difference and can thus remove the possibility of a decrease in airtightness. Accordingly, when being structured as above, the fuel cell 510 according to the present invention can have the reliability that is equal to or higher than that of a conventional fuel cell. Since the method for joining the electrode composite 512 to the electrode supports 526a and 526b is same as that of the fuel cell 10 illustrated in FIGS. 1A and 1B, the description thereof is omitted.

In the fuel cell 510 according to the present invention, the material of the sealed container 520 including the solid electrolyte 512a and the electrode supports 526a and 526b may be a ceramic material. Since the method for joining the electrode composite 512 to the electrode supports 526a and 526b in this case is same as that of the fuel cell 310 illustrated in FIGS. 4A and 4B, the description thereof is omitted.

The fuel cell according to the present invention is basically structured as described above.

Although the fuel cell according to the present invention is specifically described above, it should not be understood that the present invention is limited to the embodiments described above, and various improvements and modifications may be made without departing from the scope of the present invention. It should be noted that Variations 1 and 2 of the fuel cell according to the first embodiment of the present invention are applicable to the second to fourth embodiments in addition to the first embodiment.

### INDUSTRIAL APPLICABILITY

The fuel cell according to the present invention is industrially useful since the fuel cell can have a simple and small-sized structure with a sufficiently large cell capacity and high energy density and, in addition, can have the power supply stability that is equal to or higher than that of a conventional fuel cell and excellent reliability, maintainability and energy efficiency.

### REFERENCE SIGNS LIST

10, 110, 210, 310, 410, 510 fuel cell
12, 312, 412, 512 electrode composite (SOFC tube)
12a, 312a, 412a solid electrolyte
12b, 312b, 412b cathode
12c, 312c, 412c anode
12p, 312p, 412p cathode lead wire
12n, 312n, 412n anode lead wire
14, 514 anode fuel material
16, 216, 516 heater
18, 118, 218, 518 heat insulator
20, 120, 320, 420, 520 sealed container
22, 122, 322, 422, 522 outer wall
24, 324, 424, 524 end wall
26, 326, 526a, 526b electrode support
28, 328 tube connector
30 cover plate
32a, 532a water supply portion
32b, 532b drainage portion
32c relief valve connector
34 connecting member
42 temperature measuring means
44 voltage measuring means
46 flow rate regulator
48 water injection amount controller
52 relief valve
216a, 216b lead wire
236 heater support
236a hole
538 cap
538a exhaust tube

## Claims

1. A fuel cell comprising:
an electrode composite in a pipy shape, the electrode composite including a solid electrolyte that is in a pipy shape and airtight and conducts oxygen ions, a cathode that is formed on an inner surface of the solid electrolyte and reduces oxygen contained in air to oxygen ions during discharging, and an anode that is formed on an outer surface of the solid electrolyte and oxidizes hydrogen gas to water vapor during discharging;
an anode fuel material that reacts with the water vapor to generate the hydrogen gas and becomes itself an oxide;
a sealed container that is provided with an outer wall disposed on an outside of the electrode composite and surrounding the electrode composite, and cooperates with the electrode composite to tightly seal the anode fuel material therein; and
a heater that is disposed on at least one of an outside of the sealed container and an inside of the electrode composite and heats and maintains the solid electrolyte and the anode fuel material at a temperature equal to or higher than a predetermined temperature.

2. The fuel cell according to claim 1,
wherein the electrode composite comprises an inner flow passage for allowing air to continuously rise from a lower end opening to an upper end opening so that air supplied into the electrode composite and heated by the heater rises and is discharged from the upper end opening of the electrode composite, whereby air naturally enters from the lower end opening of the electrode composite.

3. The fuel cell according to claim 1,
further comprising a pump that is connected to an upper end opening or a lower end opening of the electrode composite so as to forcibly supply air into the electrode composite.

4. The fuel cell according to any one of claims 1 to 3,
further comprising a temperature measuring means that measures an air temperature of an inside of the electrode composite, a voltage measuring means that measures an open voltage between the cathode and the anode, and a flow rate regulator that is connected to one of ends of the electrode composite and regulates a flow rate of air supplied into the electrode composite based on at least one of the air temperature measured by the temperature measuring means and the open voltage measured by the voltage measuring means.

5. The fuel cell according to claim 4,
further comprising a water injection amount controller that controls an injection amount of water injected into the sealed container based on the open voltage measured by the voltage measuring means.

6. The fuel cell according to any one of claims 1 to 5,
wherein the sealed container is further provided with an end wall disposed at at least one of ends in opening directions of the outer wall, and two electrode supports that are each in a pipy shape and are respectively joined to opposite ends of the electrode composite,
wherein a material of the solid electrolyte is a ceramic material, and a material of the sealed container includes stainless steel,
wherein an outer periphery of the end wall is joined to one of ends in the opening directions of the outer wall, and an inner periphery of the end wall is joined to one of the electrode supports, and
wherein at least one of the end wall and the electrode supports comprises an elastic deformation portion for absorbing a difference in a thermal expansion coefficient between the solid electrolyte and the outer wall.

7. The fuel cell according to claim 6,
wherein the sealed container further comprises a connecting member for preventing a short circuit of a lead wire of the anode and maintaining airtightness of the sealed container.

8. The fuel cell according to any one of claims 1 to 5,
wherein the sealed container is further provided with an end wall disposed at at least one of ends in opening directions of the outer wall, and two electrode supports that are each in a pipy shape and are respectively joined to opposite ends of the electrode composite,
wherein a material of the solid electrolyte and the sealed container is a ceramic material, and
wherein an outer periphery of the end wall is joined to one of ends in the opening directions of the outer wall, and an inner periphery of the end wall is joined to one of the electrode supports.

9. The fuel cell according to any one of claims 1 to 5,
wherein the sealed container is further provided with an end wall disposed at at least one of ends in opening directions of the outer wall,
wherein a material of the solid electrolyte and the sealed container is a ceramic material, and
wherein an outer periphery of the end wall is joined to one of ends in the opening directions of the outer wall, and an inner periphery of the end wall is joined to the electrode composite.

10. The fuel cell according to any one of claims 6 to 9,
wherein the sealed container is further provided with a cover plate for replacing the anode fuel material, and
wherein the cover plate is detachably fixed to the outer wall or the end wall.

11. The fuel cell according to any one of claims 1 to 5,
wherein the sealed container is further provided with an end wall disposed at at least one of ends in opening directions of the outer wall, two electrode supports that are each in a pipy shape and are respectively joined to opposite ends of the electrode composite, and a cap for replacing the anode fuel material, and
wherein an outer periphery of the end wall abuts the cap and is joined to the one of ends in the opening directions of the outer wall via the cap by detachably screwing the cap to one of ends in the opening directions of the outer wall, while an inner periphery of the end wall abuts one of end surfaces of the electrode supports.

12. The fuel cell according to claim 11,
wherein a material of the solid electrolyte is a ceramic material, and a material of the sealed container is stainless steel, and
wherein at least one of the end wall and the electrode supports comprises an elastic deformation portion for absorbing a difference in a thermal expansion coefficient between the solid electrolyte and the outer wall.

13. The fuel cell according to claim 11,
wherein a material of the solid electrolyte and the sealed container is a ceramic material.

14. The fuel cell according to any one of claims 1 to 13,
wherein the heater is configured to be integrated with the outer wall.

15. The fuel cell according to any one of claims 1 to 13,
further comprising a heater support for supporting the heater inside the electrode composite,
wherein the heater support is provided with a hole for supplying air into the electrode composite.

16. The fuel cell according to any one of claims 1 to 15,
wherein the anode fuel material is a pellet consisting of iron particles or iron powder and a shape-retaining material which comprises a sintering-resistant material or a mixture thereof, the sintering-resistant material including aluminum oxide, silicon dioxide, magnesium oxide, zirconium oxide,
wherein at least part of a surface of the anode fuel material is covered with the shape-retaining material, and
wherein a proportion of a mass of the shape-retaining material to the anode fuel material is from 0.1% to 5%.

17. The fuel cell according to any one of claims 1 to 16,
wherein the cathode oxidizes oxygen ions to oxygen during charging,
wherein the anode reduces the water vapor to the hydrogen gas during charging, and
wherein the oxide of the anode fuel material reversibly reacts with the hydrogen gas to generate the water vapor and becomes itself the anode fuel material.
